# FASCICULE DE BREVET EUROPEEN

(11) **EP 0 946 571 B1**
(45) Date de publication et mention de la délivrance du brevet: **13.08.2003**
(21) Numéro de dépôt: 97951313.2
(22) Date de dépôt: 11.12.1997
(51) Int. Cl.: C07F 7/10

(54) **SYNTHESE DE BIS TRIALCOYLSILYLAMIDE ET COMPOSITION OBTENUE**
HERSTELLUNG VON BIS-TRIALKYLSILYLAMIDEN, UND DIESE VERBINDUNGEN ENTHALTENDE ZUSAMMENSETZUNGEN
SYNTHESIS OF BIS TRIALKYLSILYLAMIDE AND RESULTING COMPOSITION

(30) Priorité: 12.12.1996 FR 9615279
(43) Date de publication de la demande: 06.10.1999
(73) Titulaire: RHODIA CHIMIE, 92408 Courbevoie Cédex (FR)
(72) Inventeur: FORAT, Gérard, F-69003 Lyon (FR)
(74) Mandataire: Ricalens, François
(86) Numéro de dépôt international: FR9702276
(87) Numéro de publication internationale: WO98025936

(56) Documents cités:
- GB-A- 1 194 105
- GB-A- 2 167 753
- GB-A- 2 167 754

## Description

La présente invention a pour objet la synthèse de bis silylamide plus particulièrement des compositions présentant un taux élevé bis N,O-trialcoylsilylamide. Elle concerne plus particulièrement des bis trialcoylsilylamides utilisables comme agent de silylation.

Il est connu d'utiliser des bis silylamide comme agent de silylation ne donnant par naissance à des sels minéraux; ces produits sont particulièrement intéressants ; on peut notamment se référer à la demande de brevet français publiée sous le N° 2 574 078 et intitulée: "procédé de production d'amides d'acides carboxyliques persilylés" (sic).

Toutefois il est extrêmement difficile d'obtenir ces composés avec un degré de pureté qui soit suffisant pour en rendre l'usage facile. Parmi les problèmes rencontrés dans cet usage on peut citer
- la présence d'impureté diminue la stabilité et nuit à sa conservation ;
- la présence de dérivé monosilylé en rend l'utilisation mal aisée car le monosilylé présente également une aptitude à silyler mais avec une réactivité différente.

Cette présence est d'autant plus gênante qu'il est difficile d'obtenir des teneurs reproductibles de mono dans le bis.

Les deux isomères du bis n'ont pas une réactivité identique et ne sont pas séparables par des moyens physiques.

Le problème est encore compliqué par la grande proximité des propriétés physiques des dérivés monosilylés vis-à-vis des bis silylés. Cela rend la séparation, notamment par distillation, très difficile et souvent incomplète avec des techniques de laboratoire et inenvisageable à l'échelle industrielle.

C'est pourquoi un des buts de la présente invention est de fournir un procédé qui permette d'obtenir les N, O- bis (silyl)amides.

Un autre but de la présente invention est de fournir un procédé du type précédent qui permette d'obtenir des N, O- bis (silyl)amides directement à un degré de pureté élevé.

Un autre but de la présente invention est de fournir un procédé du type précédent qui permette d'obtenir des N, O- bis (silyl)amides directement à un degré de pureté au moins égal à 90%, avantageusement à 95%.

Un autre but de la présente invention est de fournir des N, O- bis (silyl)amides dont le degré de pureté soit au moins égal à 95%, avantageusement à 98%.

Ces buts et d'autres qui apparaîtront par la suite sont atteints au moyen d'un procédé de silylation d'acylamide pour former un bis-N,O-trialcoyl-silylamide, caractérisé par le fait que l'on soumet à l'action d'un halogénure de trialcoylsilyle, un amide portant un groupe Rf (perfluoroalcoyle) en présence d'une base dont l'halogénure, ou l'halohydrate, est insoluble dans le milieu et en présence d'un solvant non polaire et non hydrophile, par le fait que ledit solvant non polaire et non hydrophile est non basique et qu'il présente une constante diélectrique relative epsilon au plus égale à 5, non basique et non hydrophile et par le fait que ladite base est une pnictine comportant au plus 10 atomes (hors hydrogène) par fonction basique.

On choisit de préférence un solvant organique présentant un nombre donneur au plus égal à celui du cyclohexane Il est même préférable qu'il soit trop faible pour être mesuré ! La borne inférieure ne présente aucun caractère critique.

Pour ce qui est des exigences concernant la basicité du solvant organique à mettre en oeuvre, on rappellera que "l'indice donneur", connu dans le monde anglo-saxon sous le terme de "donor number", est parfois désigné de manière abrégée "DN", donne une indication sur le caractère nucléophile du solvant et révèle son aptitude à donner un doublet.

Dans l'ouvrage de Christian REINHARDT, [Solvents and Solvent Effects in Organic Chemistry - VCH p.19 (1988)], on trouve la définition du "donor number" qui est défini comme le négatif (-ΔH) de l'enthalpie (Kcal/mol) de l'interaction entre le solvant et le pentachlorure d'antimoine, dans une solution diluée de dichlorométhane.

Comme solvant non polaire il convient de mentionner ceux qui présentent une constante diélectrique relative epsilon au plus égal à 5.

Ledit solvant est avantageusement tel que l'eau n'y présente qu'une solubilité d'au plus 1%, de préférence 50 ppm.

Il est souhaitable que ledit solvant soit tel que le mélange réactionnel solubilise complètement l'amide (bis)silylé.

Ledit solvant peut être un mélange de divers solvants.

Il est souhaitable que ledit solvant soit choisi parmi les hydrocarbures, avantageusement aliphatique, de préférence non cyclique, les silanes, et les hydrocarbures fluorés et leurs mélanges.

De préférence, ledit solvant est choisi parmi ceux dont le point d'ébullition (commençante) est, sous pression atmosphérique, au plus égal à environ 100°C (avantageusement deux chiffres significatifs).

Selon une mise en oeuvre particulièrement avantageuse de la présente invention, ledit solvant est choisi parmi ceux dont le point de congélation (commençante) est, sous pression atmosphérique, au plus égal à 0°C, avantageusement à -10° C.

En ce qui concerne ladite base, elle est avantageusement organique. Il est souhaitable que ladite base ne soit pas silylable.

Ladite base est une pnictine qui présente au plus 10 atomes de carbone par fonction basique.

Par pnictine, l'on entend des dérivés trivalents hydrocarbonés des éléments de la colonne VB, de période au moins égale à la deuxième et en général inférieure à la sixième (sont plus particulièrement visés les éléments azote, phosphore, arsenic et antimoine) de la classification périodique des éléments (supplément au Bulletin de la Société Chimique de France Janvier 1966 N°1). Plus précisément ce sont des dérivés hydrocarbonés des éléments de la colonne V. Ils dérivent des pnictures d'hydrogène par substitution totale ou partielle de l'hydrogène par des restes hydrocarbonés qui peuvent être alcoyles [dans la présente description **ALCO-*yle*** est pris dans son sens étymologique de reste hydrocarboné d'un **ALCOOl** après ignorance de la fonction alcool (ou ol)] ou aryles, reliés par une liaison simple à l'atome de la colonne V B.

Ainsi dans le cas de l'azote la substitution du nitrure d'hydrogène (ammoniac) donne les amines, dans le cas du phosphore la substitution du phosphure d'hydrogène donne les phosphines, dans le cas de l'arsenic la substitution de l'arséniure d'hydrogène donne les arsines et dans le cas de l'antimoine la substitution de l'antimoniure (ou stibiure) d'hydrogène donne les stibines.

Ainsi les bases organiques constitués par des dérivés hydrocarbonés des éléments de la colonne V dérivent avantageusement des pnictures d'hydrogène par substitution totale ou partielle de l'hydrogène par des restes hydrocarbonés monovalents avantageusement par des alcoyles [dans la présente description **ALCO-y/e** est pris dans son sens étymologique de reste hydrocarboné d'un **ALCOOl** après ignorance de la fonction alcool (ou ol)] ; ces composés alcoylés sont, par analogie avec le terme de pnicture, désignés dans la présente description, sous le terme de pnictines.

Il est désirable que ladite base soit une pnictine dont l'acide associé n'est pas silylable.

Il est préférable que ladite base soit une pnictine qui présente au plus 8 atomes (hors hydrogène) par fonction basique.

Avantageusement ladite base présente une fonction amine.

Il est préférable que l'amine soit au moins partiellement soluble dans ladite amide avantageusement totalement.

Les amides visés principalement sont ceux qui présentent la formule suivante :

Rf -CO- NH₍₂₋ₓ₎-[Si(R₁)(R₂)(R₃)]ₓ

- avec x représentant 0 ou 1
- avec R₁, R₂ et R₃ étant choisis parmi les groupes alcoyles de 1 à 10 atomes de carbone, éventuellement reliés à l'un des autres R₁, R₂ et R₃
- avec Rf (perfluoroalcoyle) on entend des radicaux de formule :

   -(CX₂)ₚ-GEA

où les X semblables ou différents représentent un fluor ou un radical de formule CₙF₂ₙ₊₁ avec n entier au plus égal à 5 de préférence à 2 ;
où p représente un entier au plus égal à 2 ;
où GEA représente un groupe électroattracteur dont les éventuelles fonctions sont inertes dans les conditions de la réaction, avantageusement fluor ou un reste perfluoré de formule CₙF₂ₙ₊₁ avec n entier au plus égal à 8, avantageusement à 5.

Le nombre total de carbone de Rf est avantageusement compris entre 1 et 10, de préférence entre 1 et 5.

En général, ledit amide est un amide choisi parmi ceux de l'acide pentafluoropropanoïque, et ceux de l'acide trifluoroéthanoïque.

Selon une mise en oeuvre particulièrement avantageuse de la présente invention, on coule sur un pied d'alcane(s) (C5 à C8) (volume voisin d'une fois et demie [de 50 à 250% en volume] la quantité des autres réactifs) et de x mole de Halogenosilane, un mélange de y mole (avantageusement y est compris entre x/10 à x/2 mole) d'amide et de trialcoylamine (de deux y à 5 y équivalents).

La coulée s'effectue en maintenant à la température de reflux ou une qui lui soit proche. En fin de coulée maintient ce reflux durant 1 heure à une journée.

En fin de réaction refroidit le milieu réactionnel à l'ambiante filtre le précipité blanc formé en maintenant une atmosphère inerte et sec. Le précipité est lavé au moyen d'un alcane peu polaire avantageusement n-alcane, de préférence pentane ou hexane.

Les exemples non limitatifs suivants illustrent l'invention.

### Exemple N° 1 : synthèse du bis(triméthylsilyl)trifluoroacétamide

On coule sur un pied de 120 ml de pentane et de 0,8 mole (90,4 g) de Me3SiCl un mélange de 0,2 mole (22,6 g) de trifluoroacétamide et de 0,6 mole (60,6 g) de triéthylamine.

La coulée s'effectue à un débit de 14 ml/h en maintenant une température de reflux. En fin de coulée maintient ce reflux durant 11h30.

En fin de réaction refroidit le milieu réactionnel à 20°C, filtre le précipité blanc formé en maintenant une atmosphère inerte et sec. Le précipité est lavé au pentane.

Le filtrat est distillé rapidement pour éliminer le solvant de réaction (pentane). Le culot est rectifié ensuite sur une colonne de 10 plateaux théoriques.

On isole ainsi le bis (ébultition sous 60 mbar 59,6°C-60,1°C) avec un TT par rapport à l'acétamide de 100% et une sélectivité de 89% en bis (triméthylsilyl)trifluoroacétamide. La pureté de l'échantillon est supérieure à 99,5%

### Exemple N° 2 : rôle du solvant

Idem exemple 1 mais utilise l'hexane comme solvant.

On obtient le bis (triméthylsilyl)trifluoroacétamide rectifié avec un TT de 100% et une sélectivité 95%

### Exemple N° 3 : utilisation d'autres amines

| **durée heure** | **Θ°C** | **solvant** | **Amine** | **TT/ acétamide** | **RR/ Bis** | **RR/ mono** |
|---|---|---|---|---|---|---|
| 11,30 | 47 | pentane | Et3N | 100 | 98 | 2 |
| 16 | 68 | - | HMDZ + Et3N | 100 | 50 | 50 |
| 3 | 50 | pentane | Bu3N (a)(**) | 100 | 0 (25) | 0 (75) |
| 14 | 70 | HMDZ | Pyridine | 100 | 0 | 100 |
| 3 | 50 | pentane | diisopropyléthylamine ^{(a)(**)} | 100 | 0 (25) | 0 (75) |
| 3 | 50 | pentane | Oct3N (a) | 100 | 0 | 0 |
| 3 | 60 | - | HMDZ | 100 | 0 | 100 |

| | | | | | | |
|---|---|---|---|---|---|---|
| * température ^{(a)} En fin de coulée du mélange amide + amine tertiaire on observe la présence de mono et de bis (triméthylsilyl)trifluoroacétamide qui au cours du temps disparaît. | | | | | | |
| ^{(**)} En fin de coulée du mélange amide + amine tertiaire, le RR en bis est environ de 25% et le RR en mono de 75% - résultat obtenu par analyse CPG | | | | | | |

## Revendications

1. Procédé de silylation d'acylamide pour former un bis-N,O-trialcoyl-silylamide, **caractérisé par le fait que** l'on soumet à l'action d'un halogénure de trialcoylsilyle, un amide portant un groupe Rf (perfluoroalcoyle) en présence d'une base dont l'halogénure, ou l'halohydrate, est insoluble dans le milieu et en présence d'un solvant non polaire et non hydrophile, **par le fait que** ledit solvant non polaire et non hydrophile est non basique et qu'il présente une constante diélectrique relative epsilon au plus égale à 5, non basique et non hydrophile et **par le fait que** ladite base est une pnictine comportant au plus 10 atomes (hors hydrogène) par fonction basique.

2. Procédé selon la revendication 1, **caractérisé par le fait que** ledit solvant présente un indice donneur au plus égal à celui du cyclohexane.

3. Procédé selon les revendications 1 et 2, **caractérisé par le fait que** ledit solvant est tel que l'eau n'y présente qu'une solubilité d'au plus 1%.

4. Procédé selon les revendications 1 à 3, **caractérisé par le fait que** ledit solvant est tel que le mélange réactionnel solubilise complètement l'amide bis-silylé.

5. Procédé selon les revendications 1 à 4, **caractérisé par le fait que** ledit solvant est un mélange.

6. Procédé selon les revendications 1 à 5, **caractérisé par le fait que** ledit solvant est choisi parmi les hydrocarbures, avantageusement aliphatique, de préférence non cyclique, les silanes, et les hydrocarbures fluorés.

7. Procédé selon les revendications 1 à 6, **caractérisé par le fait que** ledit solvant est choisi parmi ceux dont le point d'ébullition (commençante) est, sous pression atmosphérique, au plus égal à 100°C (avantageusement deux chiffres significatifs).

8. Procédé selon les revendications 1 à 7, **caractérisé par le fait que** ledit solvant est choisi parmi ceux dont le point de congélation (commençante) est, sous pression atmosphérique, au plus égal à 0°C, avantageusement à -10°C.

9. Procédé selon les revendications 1 à 8, **caractérisé par le fait que** ladite base est une base organique.

10. Procédé selon les revendications 1 à 9, **caractérisé par le fait que** ladite base est une base organique non silylable.

11. Procédé selon les revendications 1 à 10, **caractérisé par le fait que** ladite base est une base organique dont l'acide associé n'est pas silylable.

12. Procédé selon les revendications 1 à 11, **caractérisé par le fait que** ladite base est une base organique qui présente au plus 8 atomes par fonction basique.

13. Procédé selon les revendications 1 à 12, **caractérisé par le fait que** ladite base est une amine.

14. Procédé selon les revendications 1 à 13, **caractérisé par le fait que** ledit amide présente la formule suivante :
Rf -CO- NH₍₂₋ₓ₎-[Si(R₁)(R₂)(R₃)]ₓ
- avec x représentant 0 ou 1 ;
- avec R₁, R₂ et R₃ étant choisis parmi les groupes alcoyles de 1 à 10 atomes de carbone, éventuellement reliés à l'un des autres R₁, R₂ et R₃ ;
- par Rf (perfluoroalcoyle) on entend des radicaux de formule :
-(CX₂)ₚ-GEA
où les X semblables ou différents représentent un fluor ou un radical de formule CₙF₂ₙ₊₁ avec n entier au plus égal à 5 de préférence à 2 ;
où p représente un entier au plus égal à 2 ;
où GEA représente un groupe électroattracteur dont les éventuelles fonctions sont inertes dans les conditions de la réaction, avantageusement fluor ou un reste perfluoré de formule CₙF₂ₙ₊₁ avec n entier au plus égal à 8, avantageusement à 5 ;
Le nombre total de carbone de Rf étant avantageusement compris entre 1 et 10, de préférence entre 1 et 5.

15. Procédé selon les revendications 1 à 14, **caractérisé par le fait que** ledit amide est un amide choisi parmi ceux de l'acide pentafluoropropanoïque, et de l'acide trifluoroéthanoïque.

16. Composition comportant au moins 95%, avantageusement 98% de N, O-bis-(silyl)amides de l'un des acides pentafluoropropanoïque et trifluoroéthanoïque.

## Patentansprüche

1. Verfahren zur Silylierung von Acylamid, um ein Bis-N,O-Trialkyl-silylamid zu bilden, **dadurch gekennzeichnet, daß** man ein Amid mit einer Gruppe Rf (Perfluoralkyl) der Einwirkung eines Trialkylsilyl-halogenides in Anwesenheit einer Base, deren Halogenid oder Halohydrat in dem Medium unlöslich sind, sowie in Anwesenheit eines nicht polaren und nicht hydrophilen Lösungsmittels unterzieht, und dadurch, daß das genannte nicht polare und nicht hydrophile Lösungsmittel nicht basisch ist und daß es eine relative Dielektrizitätskonstante ε von höchstens 5 aufweist, nicht basisch und nicht hydrophil, und dadurch, daß die genannte Base ein Pnictin ist, das höchstens 10 Atome (außer Wasserstoff) pro basische Funktion umfaßt.

2. Verfahren nach Anspruch 1, **dadurch gekennzeichnet, daß** das genannte Lösungsmittel einen Donator-Index von höchstens gleich dem des Cyclohexans aufweist.

3. Verfahren nach Anspruch 1 und 2, **dadurch gekennzeichnet, daß** das genannte Lösungsmittel derart ist, daß das Wasser darin nur eine Löslichkeit von höchstens 1 % aufweist.

4. Verfahren nach Anspruch 1 bis 3, **dadurch gekennzeichnet, daß** das genannte Lösungsmittel derart ist, daß die Reaktionsmischung vollständig das Bis-Silylamid löst.

5. Verfahren nach Anspruch 1 bis 4, **dadurch gekennzeichnet, daß** das genannte Lösungsmittel eine Mischung ist.

6. Verfahren nach Anspruch 1 bis 5, **dadurch gekennzeichnet, daß** das genannte Lösungsmittel unter den Kohlenwasserstoffen, vorteilhafterweise aliphatischen, vorzugsweise nicht cyclischen, den Silanen und den fluorierten Kohlenwasserstoffen ausgewählt wird.

7. Verfahren nach Anspruch 1 bis 6, **dadurch gekennzeichnet, daß** das genannte Lösungsmittel unter denen ausgewählt wird, deren Siedepunkt (anfangs) unter atmosphärischem Druck höchstens gleich 100 °C beträgt (vorteilhafterweise zwei signifikante Ziffern).

8. Verfahren nach Anspruch 1 bis 7, **dadurch gekennzeichnet, daß** das genannte Lösungsmittel unter denen ausgewählt wird, deren Gefrierpunkt (anfangs) unter atmosphärischem Druck höchstens gleich 0 °C, vorteilhafterweise -10 °C beträgt.

9. Verfahren nach Anspruch 1 bis 8, **dadurch gekennzeichnet, daß** die genannte Base eine organische Base ist.

10. Verfahren nach Anspruch 1 bis 9, **dadurch gekennzeichnet, daß** die genannte Base eine nicht silylierbare organische Base ist.

11. Verfahren nach Anspruch 1 bis 10, **dadurch gekennzeichnet, daß** die genannte Base eine organische Base ist, deren assoziierte Säure nicht silylierbar ist.

12. Verfahren nach Anspruch 1 bis 11, **dadurch gekennzeichnet, daß** die genannte Base eine organische Base ist, die höchstens 8 Atome pro basische Funktion aufweist.

13. Verfahren nach Anspruch 1 bis 12, **dadurch gekennzeichnet, daß** die genannte Base ein Amin ist.

14. Verfahren nach Anspruch 1 bis 13, **dadurch gekennzeichnet, daß** das genannte Amid die folgende Formel aufweist:
Rf-CO-NH₍₂₋ₓ₎-[Si(R₁)(R₂)(R₃)]ₓ
worin
- x 0 oder 1 darstellt;
- R₁, R₂ und R₃ ausgewählt werden unter den Alkylgruppen mit 1 bis 10 Kohlenstoffatomen, gegebenenfalls verbunden mit einem der anderen R₁, R₂ und R₃;
- man unter Rf (Perfluoralkyl) die Reste der Formel
-(CX₂)ₚ-GEA
versteht, in der die X, gleich oder verschieden, Fluor oder einen Rest der Formel CₙF₂ₙ₊₁ darstellen, mit n einer ganzen Zahl von höchstens 5, vorzugsweise von 2;
in der p eine ganze Zahl von höchstens 2 darstellt;
in der GEA eine elektroattraktive Gruppe darstellt, deren eventuelle Funktionen unter den Bedingungen der Reaktion inert sind, vorteilhafterweise Fluor oder einen perfluorierten Rest der Formel CₙF₂ₙ₊₁ mit n einer ganzen Zahl von höchstens 8, vorzugsweise von 5;
- die Gesamtanzahl der Kohlenstoffe von Rf vorteilhafterweise zwischen 1 und 10, vorzugsweise zwischen 1 und 5 beträgt.

15. Verfahren nach Anspruch 1 bis 14, **dadurch gekennzeichnet, daß** das genannte Amid ein Amid ist, das unter denen von Pentafluorpropansäure und Trifluorethansäure ausgewählt wird.

16. Zusammensetzung, umfassend mindestens 95 %, vorteilhafterweise mindestens 98 % von N,O-Bis-(silyl)-amiden von einer der Säuren Pentafluorpropansäure und Trifluorethansäure.

## Claims

1. Process for silylating acylamide to form a bis-N,O-trialkyl-silylamide, **characterized in that** an amide bearing a group Rf (perfluoroalkyl) is subjected to the action of a trialkylsilyl halide in the presence of a base in which the halide, or the hydrohalide, is insoluble in the medium and in the presence of a non-polar and non-hydrophilic solvent, **in that** the said non-polar and non-hydrophilic solvent is non-basic, has a relative dielectric constant epsilon of not more than 5, and is non-basic and non-hydrophilic, and **in that** the said base is a pnictine containing not more than 10 atoms (excluding hydrogen) per basic function.

2. Process according to Claim 1, **characterized in that** the said solvent has a donor number that is not more than that of cyclohexane.

3. Process according to Claims 1 and 2, **characterized in that** the said solvent is such that water has a solubility therein of only 1% at most.

4. Process according to Claims 1 to 3, **characterized in that** the said solvent is such that the reaction mixture fully dissolves the bis-silylamide.

5. Process according to Claims 1 to 4, **characterized in that** the said solvent is a mixture.

6. Process according to Claims 1 to 5, **characterized in that** the said solvent is chosen from hydrocarbons, which are advantageously aliphatic and preferably acyclic, silanes and fluorohydrocarbons.

7. Process according to Claims 1 to 6, **characterized in that** the said solvent is chosen from those whose (starting) boiling point is, at atmospheric pressure, not more than 100°C (advantageously two significant figures).

8. Process according to Claims 1 to 7, **characterized in that** the said solvent is chosen from those whose (starting) freezing point is, at atmospheric pressure, not more than 0°C, advantageously not more than -10°C.

9. Process according to Claims 1 to 8, **characterized in that** the said base is an organic base.

10. Process according to Claims 1 to 9, **characterized in that** the said base is a non-silylable organic base.

11. Process according to Claims 1 to 10, **characterized in that** the said base is an organic base whose conjugate acid is not silylable.

12. Process according to Claims 1 to 11, **characterized in that** the said base is an organic base which contains not more than 8 atoms per basic function.

13. Process according to Claims 1 to 12, **characterized in that** the said base is an amine.

14. Process according to Claims 1 to 13, **characterized in that** the said amide has the following formula:
Rf-CO-NH₍₂₋ₓ₎-[Si(R₁)(R₂)(R₃)]ₓ
- with x representing 0 or 1;
- with R₁, R₂ and R₃ being chosen from alkyl groups containing from 1 to 10 carbon atoms, optionally connected to one of the other groups R₁, R₂ and R₃;
- with Rf (perfluoroalkyl) meaning radicals of formula:
- (CX₂)ₚ-EWG
where the identical or different groups X represent a fluorine or a radical of formula CₙF₂ₙ₊₁ where n is an integer not greater than 5, preferably not greater than 2;
where p represents an integer not greater than 2;
where EWG represents an electron-withdrawing group whose functions, if any, are inert under the reaction conditions, advantageously fluorine or a perfluoro residue of formula CₙF₂ₙ₊₁ where n is an integer not greater than 8, advantageously not greater than 5;
the total number of carbons in Rf being advantageously between 1 and 10, preferably between 1 and 5.

15. Process according to Claims 1 to 14, **characterized in that** the said amide is an amide chosen from those of pentafluoropropanoic acid and those of trifluoroacetic acid.

16. Composition containing at least 95%, advantageously 98%, of N,O-bis(silyl)amides of pentafluoropropanoic acid or of trifluoroacetic acid.
